# EUROPEAN PATENT APPLICATION

(11) **EP 4 734 174 A1**
(43) Date of publication of application: **29.04.2026**
(21) Application number: 24830978.3
(22) Date of filing: 28.06.2024
(51) Int. Cl.: H01M 4/36, H01M 4/583, H01M 4/48, H01M 10/0525

(54) **GRAPHITE COMPOSITE MATERIAL AND PREPARATION METHOD THEREFOR, NEGATIVE ELECTRODE ACTIVE MATERIAL, SECONDARY BATTERY, AND ELECTRIC DEVICE**

(30) Priority: 28.06.2023 CN 202310783638
(71) Applicant: SVOLT Energy Technology Co., Ltd., Changzhou, Jiangsu 213200 (CN)
(72) Inventor: ZHAO, Xiaofeng, Changzhou, Jiangsu 213200 (CN); LIU, Jing, Changzhou, Jiangsu 213200 (CN); SHENG, Jie, Changzhou, Jiangsu 213200 (CN)
(74) Representative: Michalski Hüttermann & Partner Patentanwälte mbB
(86) International application number: PCT/CN2024/102371
(87) International publication number: WO 2025/002349

(57) **Abstract**

The present application discloses a graphite composite material and a preparation method thereof, a negative electrode active material, a secondary battery and an electrical device. The graphite composite material includes a core and a coating layer located on a surface of the core; a material of the core includes graphite, and a material of the coating layer includes a nitrogen-doped porous alumina-carbon composite material. The graphite composite material provided by the present application improves the first-cycle efficiency of a graphite material and enhances the rate performance of a battery.

## Description

This application claims the priority of a Chinese Patent Application filed with the China National Intellectual Property Administration on June 28, 2023, with application number 202310783638.6 and application title "Graphite Composite Material and Preparation Method Thereof, Negative Electrode Active Material, Secondary Battery and Electrical Device", the entire contents of which are incorporated herein by reference.

### TECHNICAL FIELD

The present application relates to the field of secondary battery technology, and specifically relates to a composite material and a preparation method thereof, a negative electrode active material, a secondary battery and an electrical device.

### BACKGROUND

Graphite has become a relatively widely used carbon negative electrode material in lithium-ion batteries due to advantages of good electrical conductivity, high crystallinity, and a good layered structure. However, during the first charge-discharge process of lithium-ion batteries, the formation of a solid electrolyte interphase (SEI) film interface on a graphite negative electrode side consumes a certain amount of active lithium ions, resulting in low first-cycle efficiency of a graphite negative electrode, thereby restricting further improvement of the energy density of lithium-ion batteries.

### SUMMARY

### Technical Problem

The present application provides a graphite composite material, and the graphite composite material can improve the first cycle efficiency of a graphite material and enhance the rate performance of a battery.

### Technical Solution

The following is an overview of the subjects described in detail herein. This overview is not intended to limit the scope of protection of the claims.

In a first aspect, the present application provides a graphite composite material, including a core and a coating layer located on a surface of the core; a material of the core includes graphite, and a material of the coating layer includes a nitrogen-doped porous alumina-carbon composite material.

Optionally, a mass percentage of the coating layer in the graphite composite material is 2wt% to 10wt%.

Optionally, the graphite includes at least one of spherical natural graphite, flake graphite, and artificial graphite.

Optionally, the material of the coating layer is further doped with non-metal atoms, and the non-metal atoms includes at least one of sulfur and phosphorus.

In a second aspect, the present application provides a preparation method for a graphite composite material, including the following steps:
dispersing graphite and an aluminum carboxylate salt in a first organic solvent to obtain a solution A;
dispersing an alkaline coupling agent in a second organic solvent to obtain a solution B;
mixing the solution A, the solution B, an oxidant and a nitrogen source, followed by a solvothermal reaction to obtain an intermediate; and
performing a sintering treatment on the intermediate under a protective atmosphere to obtain the graphite composite material.

Optionally, the graphite includes at least one of spherical natural graphite, flake graphite, and artificial graphite.

Optionally, the aluminum carboxylate salt includes at least one of aluminum citrate, aluminum stearate, aluminum dihydroxyaminoacetate, aluminum acetate, aluminum acrylate, and aluminum oleate.

Optionally, the first organic solvent includes polyethylene glycol.

Optionally, a mass ratio of the aluminum carboxylate salt to the graphite is 5:100 to 15: 100.

Optionally, a mass percentage of the aluminum carboxylate salt in the first organic solvent is 0.5wt% to 5wt%.

Optionally, the alkaline coupling agent includes an aluminum-based coupling agent containing an amino functional group.

Optionally, the alkaline coupling agent includes at least one of aluminum 5-amino-3-carboxylate methyl ester, aluminum diisopropyldithiocarbamate, and aluminum dihydroxyaminoacetate.

Optionally, the second organic solvent includes at least one of cyclohexane, xylene, and acetone.

Optionally, a mass percentage of the alkaline coupling agent in the second organic solvent is 1wt% to 10wt%.

Optionally, the oxidant includes hydrogen peroxide.

Optionally, the nitrogen source includes at least one of urea, melamine, pyrrole, and aniline.

Optionally, a mass ratio of the solution A, the solution B, the oxidant and the nitrogen source is 500:50:1:1 to 500:150:10:10.

Optionally, the solvothermal reaction is performed under a pressure of 1MPa to 5MPa.

Optionally, a temperature of the solvothermal reaction is 50°C to 150°C, and a duration of the solvothermal reaction is 30min to 300min.

Optionally, the protective atmosphere includes at least one of nitrogen gas and an inert gas.

Optionally, a heating rate of the sintering treatment is 1°C/min to 10°C/min.

Optionally, a temperature of the sintering treatment is 600°C to 1200°C, and a duration of the sintering treatment is 1h to 6h.

Optionally, a gas is also introduced during the sintering treatment, and the gas includes at least one of hydrogen sulfide, phosphine, ammonia, sulfur dioxide, and nitrogen dioxide.

Optionally, a volume ratio of the gas to the protective atmosphere is 1:10 to 5:10.

In a third aspect, the present application provides a negative electrode active material, including the foregoing graphite composite material; or, the negative electrode active material includes a graphite composite material prepared by the foregoing preparation method.

In a fourth aspect, the present application provides a secondary battery, including a positive electrode sheet, a negative electrode sheet, a separator and an electrolyte, and the negative electrode sheet includes the foregoing negative electrode active material.

In a fifth aspect, the present application provides an electrical device, including the foregoing secondary battery.

### Beneficial Effects

1. In the graphite composite material provided by the present application, a surface of a graphite material is coated with a nitrogen-doped porous alumina-carbon composite material, and relying on porous alumina not consuming lithium ions and not forming an SEI film during charge-discharge processes improves the first-cycle efficiency of the graphite material.
2. In the graphite composite material provided by the present application, a coating layer material is doped with a nitrogen element, which endows the coating layer material with more active sites, thereby improving the electronic conductivity of the graphite material and enhancing the rate performance of a battery.
3. In the graphite composite material provided by the present application, a coating layer material has a porous structure, which gives a graphite material a high specific surface area, improves the liquid absorption and retention capability of the material, and facilitates ion transport.
4. In the preparation method for a graphite composite material provided by the present application, an organic aluminum salt is used as an aluminum source, which has milder reaction conditions compared to an inorganic aluminum salt, and also has good coating uniformity, and the organic aluminum salt forms a porous structure after carbonization, which is beneficial to improving the kinetic performance of a battery.

### BRIEF DESCRIPTION OF THE DRAWINGS

The technical solutions and other beneficial effects of the present application will become apparent through a detailed description of specific embodiments of the present application below in conjunction with the drawings.

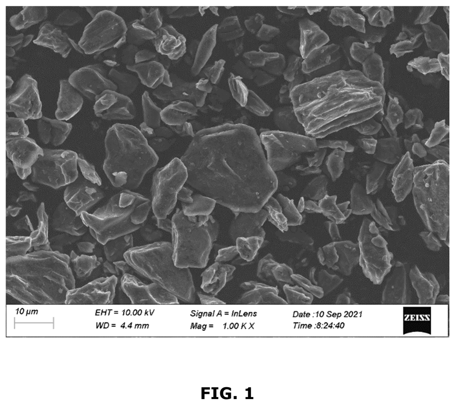

FIG. 1 is a scanning electron microscope (SEM) image of a graphite composite material provided by the present application.

### DETAILED DESCRIPTION OF EMBODIMENTS

The technical solutions in the embodiments of the present application will be clearly and completely described below in conjunction with the drawings in the embodiments of the present application. The described embodiments are only a part of the embodiments of the present application, not all of the embodiments. Based on the embodiments in the present application, all other embodiments obtained by a person of ordinary skill in the art without making creative efforts fall within the scope of protection of the present application.

In the description of the present application, it should be noted that unless otherwise clearly specified and limited, the term "and/or" herein is merely a way of describing an association relationship of associated objects, indicating that three relationships may exist, for example, A and/or B may represent: A exists alone, A and B exist simultaneously, and B exists alone. In addition, the character "/" herein generally represents an "or" relationship between the preceding and following associated objects unless specifically stated otherwise.

As described in the background art, when graphite is used as a negative electrode material of a lithium-ion battery, because an SEI film is formed on a graphite surface during a first charge-discharge cycle, a part of lithium ions is consumed, causing low first-cycle efficiency of a battery and restricting further improvement of the energy density of the lithium-ion battery.

In order to solve this technical problem, the present application provides a graphite composite material with high first-cycle efficiency and balanced rate performance by performing a coating treatment on a graphite material. The structure and preparation method of the graphite composite material are specifically described below.

The graphite composite material provided by the present application has a core-shell structure, including a core and a coating layer covering a surface of the core. A material of the core includes graphite, and a material of the coating layer includes a nitrogen-doped porous alumina-carbon composite material.

In the present application, a type of graphite in the core is not limited, for example, the type of graphite may be at least one of spherical natural graphite, flake graphite, and artificial graphite. Optionally, the graphite is artificial graphite. For a particle size of graphite, the present application has no special limitation. Generally, a D50 particle size of graphite may be controlled to be between 1µm and 50µm.

In the present application, the graphite may be either unmodified graphite or modified graphite, which is not limited in the present application. For modified graphite, the modified graphite may be, for example, graphite doped with a silicon material, graphite doped with a conductive carbon material, etc.

In the present application, an alumina-carbon composite material in the coating layer has a porous structure, and the presence of these pores improves the wettability of an electrolyte to a graphite material, and the liquid storage and retention capability of the graphite material.

In the present application, a coating layer material is also doped with a certain amount of nitrogen atoms. The presence of nitrogen atoms endows the coating layer material with more active sites, and the presence of more active sites facilitates electron transport, therefore, nitrogen atom doping improves the electronic conductivity of a graphite material.

In the graphite composite material of the present application, a mass percentage of the coating layer needs to be controlled within a certain range. If the mass percentage is too low, a complete coating of graphite particles cannot be achieved; if the mass percentage is too high, a proportion of an active material in the graphite composite material will be low, affecting the energy density of a battery. Generally, the mass percentage of the coating layer may be controlled to be from 2wt% to 10wt%, for example, the mass percentage may be any value of 2wt%, 3wt%, 4wt%, 5wt%, 6wt%, 7wt%, 8wt%, 9wt%, 10wt%, or a range composed of any two of these values.

In some embodiments of the present application, a material of the coating layer is further doped with non-metal atoms, and the non-metal atoms include but are not limited to at least one of sulfur and phosphorus. The doped non-metal atoms can also play a role of increasing the activity of the material, further improving the electronic conductivity of a graphite material.

The graphite composite material provided by the present application has the following advantages:
(1) Since alumina has a characteristic of being relatively inert to lithium ions and does not react with an electrolyte to form a film layer containing SEI components such as lithium carbonate, coating an alumina layer on a surface of a graphite material can reduce the consumption of lithium ions caused by the formation of an SEI film during a charge-discharge process of a graphite negative electrode, and can improve the first-cycle efficiency of graphite.
(2) Nitrogen atoms doped in a coating layer material can improve the electronic conductivity of the material and reduce impedance, enhancing the rate performance of a battery.
(3) A carbon material in the coating layer is obtained by carbonization of an organic compound, and the carbon material is amorphous carbon with a porous structure, which is not only conducive to ion transport, but also can improve the electronic conductivity of a graphite material.
(4) A porous structure can increase the specific surface area of a material, which is beneficial to improving the wettability of an electrolyte to a graphite material and improving the liquid absorption and retention capability of the graphite material; meanwhile, the porous structure is conducive to ion transport and is beneficial to improving the kinetic performance of a battery.

Optionally, the present application provides a preparation method for the foregoing graphite composite material, including the following steps:
S1. dispersing graphite and an aluminum carboxylate salt in a first organic solvent to obtain a solution A;
S2. dispersing an alkaline coupling agent in a second organic solvent to obtain a solution B;
S3. mixing the solution A, the solution B, an oxidant and a nitrogen source, followed by a solvothermal reaction to obtain an intermediate;
S4. performing a sintering treatment on the intermediate under a protective atmosphere to obtain the graphite composite material.

In the foregoing step S1, the graphite may be at least one of spherical natural graphite, flake graphite, and artificial graphite. Optionally, a graphite material is artificial graphite.

In a subsequent preparation process, the aluminum carboxylate salt will form a porous alumina coating on a surface of the graphite. In this application, an aluminum carboxylate salt is selected as an organic aluminum salt. Compared with an inorganic aluminum salt, an organic aluminum carboxylate salt has milder reaction conditions, and can form an alumina precursor coated on a surface of graphite particles in a subsequent solvothermal reaction, with better coating uniformity; and the organic aluminum carboxylate salt will form a porous structure after carbonization, which is beneficial to improving the kinetic performance of a battery.

In the present application, the aluminum carboxylate salt includes but is not limited to at least one of aluminum citrate, aluminum stearate, aluminum dihydroxyaminoacetate, aluminum acetate, aluminum acrylate, and aluminum oleate.

In the present application, a mass ratio of the aluminum carboxylate salt to the graphite is preferably 5:100 to 15:100, for example, the mass ratio may be any value of 5:100, 6:100, 7:100, 8:100, 9:100, 10:100, 11:100, 12:100, 13:100, 14:100, 15:100, or a range composed of any two of these values. If the mass ratio of the aluminum carboxylate salt is too low, a complete coating layer cannot be formed on a graphite surface; if the mass ratio of the aluminum carboxylate salt is too high, a formed coating layer will be too thick, causing a proportion of an active material in a graphite composite material to be too low and affecting the energy density of a battery.

In the present application, a first organic solvent is mainly used to dissolve an aluminum carboxylate salt and disperse graphite. Optionally, the first organic solvent is a solvent that is difficult to volatilize, so that the first organic solvent will not volatilize during subsequent drying and calcination processes, but will carbonize during a calcination process to form a porous carbon material, improving the conductivity of a graphite composite material. Optionally, in some embodiments, the first organic solvent is polyethylene glycol (PEG), and PEG has good miscibility with other organic solvents and is not easily volatile.

In the present application, a mass percentage of an aluminum carboxylate salt in a first organic solvent is preferably 0.5wt% to 5wt%, for example, the mass percentage may be any value of 0.5wt%, 1wt%, 1.5wt%, 2wt%, 2.5wt%, 3wt%, 3.5wt%, 4wt%, 4.5wt%, 5wt%, or a range composed of any two of these values.

In the present application, when preparing a solution A, an order of adding graphite and an aluminum carboxylate salt is not limited, for example, the aluminum carboxylate salt may be first dissolved in a first organic solvent, and then the graphite is added and dispersed uniformly. Alternatively, the graphite is added first and dispersed uniformly, and then the aluminum carboxylate salt is added.

In step S2 of the present application, a role of the alkaline coupling agent on one hand is to improve the dispersibility of graphite in the solvent, thereby improving the uniformity of the coating in the subsequent preparation process; and a role on the other hand is to undergo an acid-base reaction with the aluminum carboxylate salt to obtain the alumina precursor.

Optionally, the foregoing alkaline coupling agent is an aluminum-based coupling agent, and optionally, the aluminum-based coupling agent is an aluminum-based coupling agent containing an amino group. An amino group in the aluminum-based coupling agent containing an amino group will be doped in a coating layer in a form of nitrogen atoms during a subsequent preparation process, which is beneficial to improving the electronic conductivity of a graphite composite material. In some embodiments, the alkaline coupling agent includes but is not limited to at least one of aluminum 5-amino-3-carboxylate methyl ester, aluminum diisopropyldithiocarbamate, and aluminum dihydroxyaminoacetate.

In the present application, a second organic solvent needs to be able to dissolve the foregoing alkaline coupling agent and have good miscibility with a first organic solvent. Second organic solvents that meet the requirements include but are not limited to at least one of cyclohexane, xylene, and acetone.

In the present application, a mass percentage of the alkaline coupling agent in the second organic solvent is preferably 1wt% to 10wt%, for example, the mass percentage may be any value of 1wt%, 2wt%, 3wt%, 4wt%, 5wt%, 6wt%, 7wt%, 8wt%, 9wt%, 10wt%, or a range composed of any two of these values.

It should be pointed out that, in the present application, the aluminum carboxylate salt and the alkaline coupling agent are separated and respectively prepared into a solution A and a solution B, and the reason is that these two components are acidic and alkaline respectively, and if the two components are mixed together to prepare a solution, an acid-base reaction will occur, therefore, the two components need to be dissolved separately to prepare solutions, and this is also beneficial to dispersing graphite uniformly.

In step S3 of the present application, after the solution A, the solution B, the oxidant and the nitrogen source are mixed uniformly, the alumina precursor is formed through the solvothermal reaction and is coated on the surface of graphite particles; at the same time, the nitrogen source forms nitrogen free radicals in a reaction and is doped in the alumina precursor; and the presence of the nitrogen source can improve a pore structure inside the coating layer, which is beneficial to improving the specific surface area and liquid absorption capability of a material.

A function of the foregoing oxidant is to catalyze an acid-base reaction between the aluminum carboxylate salt and the alkaline coupling agent. The oxidant may be a commonly used oxidant in the field, and optionally, the oxidant is hydrogen peroxide. When hydrogen peroxide is used as the oxidant, the hydrogen peroxide is reduced during a reaction process, and a product obtained is water, therefore, no impurities are introduced into a system.

In the present application, the nitrogen source may be a commonly used nitrogen-containing organic compound in the field, including but not limited to at least one of urea, melamine, pyrrole, and aniline.

In the present application, a mass ratio of the solution A, the solution B, the oxidant and the nitrogen source is preferably 500:50:1:1 to 500:150:10:10. The ratio can ensure the formation of a complete coating layer with an appropriate thickness on a surface of graphite particles.

In the present application, the solvothermal reaction needs to be carried out in a high-pressure reaction vessel (for example, a high-pressure reactor), and optionally, a reaction pressure is 1MPa to 5MPa, for example, the reaction pressure may be any value of 1MPa, 2MPa, 3MPa, 4MPa, 5MPa, or a range composed of any two of these values.

Optionally, a temperature of a solvothermal reaction is 50°C to 150°C, for example, the temperature may be any value of 50°C, 60°C, 70°C, 80°C, 90°C, 100°C, 110°C, 120°C, 130°C, 140°C, 150°C, or a range composed of any two of these values. A time of the solvothermal reaction is 30min to 300min, for example, the time may be any value of 30min, 50min, 80min, 100min, 120min, 150min, 180min, 200min, 220min, 250min, 270min, 300min, or a range composed of any two of these values.

After the foregoing solvothermal reaction ends, a reaction product is collected and dried to obtain an intermediate. In some embodiments of the present application, the product may be collected by performing filtering, centrifuging, etc. on a reaction solution. The collected product is then dried to remove a residual organic solvent (mainly a second organic solvent) for later use. A drying method includes but is not limited to vacuum drying.

In step S4 of the present application, the intermediate is subjected to the high-temperature sintering treatment, and during the sintering process, the alumina precursor on the surface of graphite particles forms the porous alumina, and the organic substance in the intermediate (including the first organic solvent, and organic substances in the aluminum carboxylate salt and the alkaline coupling agent) is carbonized to form the carbon material, and finally the nitrogen-doped porous alumina-carbon composite material is coated on the graphite surface.

The foregoing sintering reaction is carried out in a sintering furnace (for example, a tube furnace) and needs to be performed under the protective atmosphere. That is, the intermediate is transferred to the tube furnace, the protective atmosphere is first introduced into the tube furnace to discharge air in a tube, and then a temperature is raised to perform the sintering reaction, and during the sintering process, the protective atmosphere is continuously introduced into the tube. The protective atmosphere includes one or more of nitrogen gas and an inert gas, and optionally, the protective gas is argon.

In the present application, a heating rate of the tube furnace is 1°C/min to 10°C/min, for example, the heating rate may be any value of 1°C/min, 2°C/min, 3°C/min, 4°C/min, 5°C/min, 6°C/min, 7°C/min, 8°C/min, 9°C/min, 10°C/min, or a range composed of any two of these values.

In the present application, a temperature of the sintering reaction is 600°C to 1200°C, for example, the temperature may be any value of 600°C, 650°C, 700°C, 750°C, 800°C, 850°C, 900°C, 950°C, 1000°C, 1050°C, 1100°C, 1150°C, 1200°C, or a range composed of any two of these values.

In the present application, a duration of the sintering reaction is 1h to 6h, for example, the duration may be any value of 1h, 2h, 3h, 4h, 5h, 6h, or a range composed of any two of these values.

Optionally, in some optional embodiments, a gas may also be introduced simultaneously during a sintering treatment, and the gas includes but is not limited to at least one of hydrogen sulfide, phosphine, ammonia, sulfur dioxide, and nitrogen dioxide. During a sintering process, non-metal atoms (N, S, P) in the gas can also be doped into the coating layer, which can further improve the electronic conductivity of a material and reduce impedance; meanwhile, the introduced gas easily forms a pore structure on the material surface, improving the specific surface area of the material.

In the present application, the gas may be mixed with the protective atmosphere and then introduced into the tube furnace together, and in the mixed gas, optionally, a volume ratio of the gas to the protective atmosphere is 1:10 to 5:10, for example, the volume ratio may be any value of 1:10, 2:10, 3:10, 4:10, 5:10, or a range composed of any two of these values.

The present application also provides a secondary battery, including a positive electrode sheet, a negative electrode sheet, a separator and an electrolyte, and the separator is configured to isolate the positive electrode sheet from the negative electrode sheet. A negative electrode active material of the negative electrode sheet at least includes the foregoing graphite composite material.

The present application also provides an electrical device, including the foregoing secondary battery, which is used as a power supply for the electrical device. In some embodiments, the electrical device of the present application includes but is not limited to: a backup power supply, a motor, an electric vehicle, an electric motorcycle, a power-assisted bicycle, a bicycle, an electric tool, a large household storage battery, etc.

The present application is further described below in conjunction with examples and comparative examples. The following examples and comparative examples should not be understood as limitations to the technical solutions of the present application.

### Example 1

S1. 10g of aluminum citrate was added to 1000g of polyethylene glycol to prepare a 1wt% uniform solution, then 100g of artificial graphite was added and dispersed uniformly to obtain a solution A;
S2. 5g of aluminum 5-amino-3-carboxylate methyl ester was added to 100g of a cyclohexane organic solvent and dispersed uniformly to obtain a 5wt% solution B;
S3. 500g of the solution A and 100g of the solution B were taken and added to a high-pressure reactor, and 5g of hydrogen peroxide (concentration 30%) and 5g of melamine were added, dispersed uniformly, and reacted at a temperature of 100°C and a pressure of 3MPa for 90min, filtered, and vacuum dried at 80°C for 24h to obtain an intermediate;
S4. The intermediate was transferred to a tube furnace, argon was first introduced to discharge air in the tube, then under a mixed gas (composed of ammonia and argon, Vammonia:Vargon=3:10, flow rate 100ml/min), a temperature was raised to 800°C at a heating rate of 5°C/min, and sintered for 3h to obtain a graphite composite material.

### Example 2

S1. 5g of aluminum stearate was added to 1000g of polyethylene glycol to prepare a 0.5wt% uniform solution, then 100g of artificial graphite was added and dispersed uniformly to obtain a solution A;
S2. 1g of aluminum diisopropyldithiocarbamate was added to 100g of a xylene organic solvent and dispersed uniformly to obtain a 1wt% solution B;
S3. 500g of the solution A and 50g of the solution B were taken and added to a high-pressure reactor, and 1g of hydrogen peroxide (concentration 30%) and 1g of pyrrole were added, dispersed uniformly, and reacted at a temperature of 50°C and a pressure of 5MPa for 300min, filtered, and vacuum dried at 80°C for 24h to obtain an intermediate;
S4. The intermediate was transferred to a tube furnace, argon was first introduced to discharge air in the tube, then under a mixed gas (composed of phosphine and argon, Vphosphine:Vargon=1:10, flow rate 100ml/min), a temperature was raised to 600°C at a heating rate of 1°C/min, and sintered for 6h to obtain a graphite composite material.

### Example 3

S1. 15g of aluminum acetate was added to 1000g of polyethylene glycol to prepare a 0.15wt% uniform solution, then 100g of artificial graphite was added and dispersed uniformly to obtain a solution A;
S2. 10g of aluminum dihydroxyaminoacetate was added to 100g of an acetone organic solvent and dispersed uniformly to obtain a 10wt% solution B;
S3. 500g of the solution A and 150g of the solution B were taken and added to a high-pressure reactor, and 10g of hydrogen peroxide (concentration 30%) and 10g of urea were added, dispersed uniformly, and reacted at a temperature of 150°C and a pressure of 1MPa for 30min, filtered, and vacuum dried at 80°C for 24h to obtain an intermediate;
S4. The intermediate was transferred to a tube furnace, argon was first introduced to discharge air in the tube, then under a mixed gas (composed of sulfur dioxide and argon, Vsulfur dioxide:Vargon=5: 10, flow rate 100ml/min), a temperature was raised to 1200°C at a heating rate of 10°C/min, and sintered for 1h to obtain a graphite composite material.

### Comparative Example 1

S1. 100g of aluminum chloride was added to 500g of deionized water, then 3g of aluminum 5-amino-3-carboxylate methyl ester and 1000g of artificial graphite were added and mixed uniformly; then 30g of ammonia water was added and transferred to a high-pressure reactor, reacted at a temperature of 100°C and a pressure of 3MPa for 60min, filtered, and vacuum dried at 80°C for 24h to obtain a precursor material;
S2. The precursor material was transferred to a tube furnace, argon was first introduced to discharge air in the tube, then a mixed gas (composed of ammonia and argon, Vammonia:Vargon=3:10, flow rate 10ml/min) was introduced, and a temperature was raised to 800°C at a heating rate of 5°C/min, and sintered for 3h to obtain a graphite composite material.

### Comparative Example 2

The difference between Comparative Example 2 and Example 1 is that: in step S2, when preparing a solution B, aluminum 5-amino-3-carboxylate methyl ester was not added.

### Comparative Example 3

The difference between Comparative Example 3 and Comparative Example 1 is that: in step S4, during a sintering process, a gas introduced into the tube furnace was pure argon, and ammonia was not introduced.

### Comparative Example 4

The difference between Comparative Example 4 and Example 1 is that: a melamine nitrogen source was not added in step S3.

### Performance Test

### 1. SEM Test

The graphite composite material prepared in Example 1 was subjected to an SEM test, and the test results are shown in FIG. 1.

As can be seen from FIG. 1, the graphite composite material prepared in Example 1 presents a granular form with a small amount of a porous structure on a surface, and a particle size D50 thereof is between 8µm and 15µm.

### 2. Physicochemical Property and Coin Cell Test

### 2.1 Physicochemical Property Test

According to methods specified in GBT-24533-2019 "Graphite-based Anode Materials for Lithium-ion Batteries", a powder OI value, a specific surface area, and a tap density of the graphite composite materials prepared in Examples 1 to 3 and Comparative Examples 1 to 4 were tested. The test results are shown in Table 1.

### 2.2 Coin Cell Assembly

The graphite composite materials in Examples 1 to 3 and Comparative Examples 1 to 4 were used as a negative electrode material of a lithium-ion battery to assemble a coin cell, and a specific preparation method for a negative electrode material was as follows:
According to a mass ratio of 95:2.5:1.5:1:150, a graphite composite material, CMC, SBR, SP, and H2O were mixed to prepare a negative electrode sheet. A lithium sheet was used as a positive electrode, an electrolyte used was LiPF₆/EC+DEC, (LiPF₆ was an electrolyte, a mixture of EC and DEC with a volume ratio of 1:1 was a solvent, and an electrolyte concentration was 1.3mol/L); a separator used was a composite film of polyethylene PE, polypropylene PP and polyethylene-polypropylene PEP. The assembly of the coin cell was carried out in an argon-filled glove box.

### 2.3 Coin Cell Performance Test

The electrochemical performance of a coin cell was tested on a Wuhan Land CT2001A battery tester, a charge-discharge voltage range was 0.005V to 2.0V, a charge-discharge rate was 0.1C, and a first discharge capacity and a first-cycle efficiency of the coin cell, as well as a rate performance (2C/0.1C), were tested, and the test results are shown in Table 1.

**Table 1 Physicochemical properties of graphite composite materials and performance test results of coin cells in examples and comparative examples.**

| | Powder OI value | Specific surface area (m²/g) | Tap density (g/cm³) | First discharge capacity (mAh/g) | First-cycle efficiency (%) | Rate (2C/0.1C, %) |
|---|---|---|---|---|---|---|
| Example 1 | 2.4 | 2.5 | 1.19 | 361.2 | 96.2 | 92.1 |
| Example 2 | 2.5 | 2.7 | 1.18 | 362.7 | 95.8 | 92.8 |
| Example 3 | 2.7 | 2.5 | 1.22 | 359.8 | 96.5 | 91.2 |
| Comparative Example 1 | 3.7 | 2.0 | 1.05 | 355.5 | 94.4 | 87.6 |
| Comparative Example 2 | 3.1 | 2.7 | 1.04 | 352.3 | 92.2 | 84.7 |
| Comparative Example 3 | 3.0 | 2.1 | 1.15 | 357.4 | 93.9 | 78.5 |
| Comparative Example 4 | 2.9 | 2.3 | 1.20 | 358.5 | 95.7 | 85.3 |

Please refer to Table 1, in Example 1, since a surface of graphite is coated with a porous alumina-carbon coating layer, a porous structure makes a specific surface area of a graphite material relatively large, reaching 2.5m²/g; since the alumina layer is coated, a tap density of a material is improved, reaching 1.19g/cm³; and an OI value of a powder is relatively low, only 2.4, which is conducive to ion diffusion and rate performance. In addition, the presence of the coating layer can improve the first-cycle efficiency and capacity of graphite, and enhance the rate performance of a battery. In this example, a first discharge capacity of a coin cell reached 361.2mAh/g, a first-cycle efficiency reached 96.2%, and a rate performance at 2C/0.1C reached 92.1%.

Examples 2 to 3 show similar results to Example 1. A first discharge capacity of a coin cell is above 359mAh/g, a first-cycle efficiency is above 95.5%, and a rate performance at 2C/0.1C is above 91%, showing excellent electrochemical performance.

In Comparative Example 1, an aluminum salt used was an inorganic aluminum salt, aluminum chloride, and through a hydrothermal reaction between aluminum chloride and ammonia water under high temperature and high pressure, aluminum hydroxide was formed and coated on a surface of graphite, and then after a sintering treatment, an alumina coating layer was obtained, and a surface of the coating layer had no porous structure. Therefore, in Comparative Example 1, a specific surface area of a graphite material has a significant decrease, being 2.0m²/g; while a powder OI value has a significant increase, reaching 3.7. In terms of electrochemical performance, since a surface of the graphite composite material of Comparative Example 1 has no porous structure, a liquid absorption and retention capability will be affected, reducing the rate performance of a battery, and also having a certain impact on the first-cycle efficiency and capacity of the battery. From the results, a first discharge capacity of a coin cell was 355.5mAh/g, a first-cycle efficiency was 94.4%, and a rate performance at 2C/0.1C was only 87.6%.

In a preparation process of a graphite composite material, a coupling agent can improve the dispersibility of graphite, which is beneficial to forming a more uniform coating layer. At the same time, nitrogen atoms contained in the coupling agent can improve the electronic conductivity of a material. In Comparative Example 2, no coupling agent was added during the preparation of a graphite composite material, therefore, a uniform coating layer could not be formed on a graphite surface, which led to obvious decreases in indicators such as first-cycle efficiency, capacity and rate performance of the graphite composite material in Comparative Example 2. A first discharge capacity of a coin cell was 352.3mAh/g, a first-cycle efficiency was 92.2%, and a rate performance at 2C/0.1C was only 84.7%.

Compared with Example 1, Comparative Example 3 did not introduce ammonia, causing poor electronic conductivity of a material shell, reducing rate performance, and a rate performance at 2C/0.1C was only 78.5%. Compared with Example 1, Comparative Example 4 did not add a melamine nitrogen source, causing poor electronic conductivity of a material core, and fewer pores in the core, reducing a specific surface area thereof, thereby reducing a rate performance thereof, and a rate performance at 2C/0.1C was only 85.3%.

### 3. Pouch Cell Test

### 3.1 Pouch Cell Preparation

The graphite composite materials in Examples 1 to 3 and Comparative Examples 1 to 4 were subjected to slurry mixing and coating to prepare a negative electrode sheet, NCM622 was used as a positive electrode, LiPFs/EC+DEC+PC was used as an electrolyte (a solute was LiPF₆, a concentration was 1.2mol/L, a solvent volume ratio EC:DEC:PC=1:1:1), and a Celgard2400 film was used as a separator to prepare a 5Ah pouch cell.

### 3.2 Electrochemical Performance Test

Liquid absorption capability of a negative electrode sheet: a 1mL burette was used, and VmL of an electrolyte was drawn, a drop was added on a surface of the foregoing negative electrode sheet, and timing was started until the electrolyte was completely absorbed, a time t was recorded, and a liquid absorption speed V/t of the electrode sheet was calculated.

Cycle performance: charge-discharge current 1.0C/1.0C, voltage range 2.8V to 4.2V, number of cycles 500.

Rate performance: constant current ratio under 2C charging condition, i.e., constant current capacity/(constant current capacity + constant voltage capacity).

The above test results are shown in Table 2.

**Table 2 Performance test results of pouch cells**

| Item | Liquid absorption speed (ml/min) | Cycle retention rate (%) | 2C constant current ratio (%) |
|---|---|---|---|
| Example 1 | 6.8 | 95.7 | 94.1 |
| Example 2 | 7.2 | 95.9 | 94.9 |
| Example 3 | 6.3 | 94.8 | 93.6 |
| Comparative Example 1 | 4.4 | 87.9 | 89.3 |
| Comparative Example 2 | 6.0 | 89.3 | 88.2 |
| Comparative Example 3 | 5.1 | 86.8 | 85.3 |
| Comparative Example 4 | 5.7 | 87.1 | 86.3 |

Please refer to Table 2, in Examples 1 to 3, since a coating layer on a graphite surface has a porous structure, the specific surface area of graphite is increased, therefore, a negative electrode sheet exhibits a high liquid absorption speed. At the same time, the pouch cells of Examples 1 to 3 also have good cycle performance, and a cycle retention rate at 500 cycles is above 94.5%. In addition, since nitrogen element doping is performed by introducing ammonia during a sintering process, active sites of a material are increased, the electronic conductivity of the material is improved, impedance is reduced, and finally a constant current ratio of a graphite composite material is improved. Therefore, the 2C constant current ratio of the pouch cells in Examples 1 to 3 is above 93.5%.

In Comparative Example 1, since a coating layer on a graphite surface has no porous structure, a liquid absorption speed of a negative electrode sheet is very low. The low liquid absorption speed will also affect the cycle performance of a battery, the cycle retention rate of the pouch cell in Comparative Example 1 at 500 cycles is only 87.9%, and the 2C constant current ratio is only 89.3%.

In Comparative Example 2, since no coupling agent was added during the preparation of a graphite composite material, the dispersibility of graphite is affected, which ultimately has a certain impact on the coating effect. From the results, compared with Examples 1 to 3, a cycle retention rate and the 2C constant current ratio of a pouch cell in Comparative Example 2 have a certain decrease, the cycle retention rate at 500 cycles is only 89.3%, and the 2C constant current ratio is only 88.2%.

Comparative Example 3 did not introduce ammonia during a sintering process, and Comparative Example 4 did not add a nitrogen source in a solvothermal reaction, which not only causes fewer pores on a material surface and in a core part, affecting the specific surface area and liquid absorption speed of a material; but also leads to a decrease in a nitrogen doping concentration in a coating layer, affecting the electronic conductivity of the material, increasing battery impedance, and ultimately reducing the rate performance and cycle performance of a battery. From the results, for the pouch cells in Comparative Examples 3 to 4, the cycle retention rate at 500 cycles is below 88%, and the 2C constant current ratio is below 87%, showing a significant decrease compared with Examples 1 to 3.

In summary, although the present application has been disclosed above with optional embodiments, the above optional embodiments are not intended to limit the present application, and a person of ordinary skill in the art can make various changes and modifications without departing from the spirit and scope of the present application, therefore, the scope of protection of the present application is subject to the scope defined by the claims.

## Claims

1. A graphite composite material, comprising a core and a coating layer located on a surface of the core; wherein, a material of the core comprises graphite, and a material of the coating layer comprises a nitrogen-doped porous alumina-carbon composite material.

2. The graphite composite material according to claim 1, wherein a mass percentage of the coating layer in the graphite composite material is 2wt% to 10wt%.

3. The graphite composite material according to claim 1, wherein the graphite comprises at least one of spherical natural graphite, flake graphite, and artificial graphite.

4. The graphite composite material according to claim 1, wherein the material of the coating layer is further doped with non-metal atoms, and the non-metal atoms comprise at least one of sulfur and phosphorus.

5. A preparation method for a graphite composite material, comprising the following steps:
dispersing graphite and an aluminum carboxylate salt in a first organic solvent to obtain a solution A;
dispersing an alkaline coupling agent in a second organic solvent to obtain a solution B;
mixing the solution A, the solution B, an oxidant and a nitrogen source, followed by a solvothermal reaction to obtain an intermediate; and
performing a sintering treatment on the intermediate under a protective atmosphere to obtain the graphite composite material.

6. The preparation method for a graphite composite material according to claim 5, wherein
the graphite comprises at least one of spherical natural graphite, flake graphite, and artificial graphite; and/or,
the aluminum carboxylate salt comprises at least one of aluminum citrate, aluminum stearate, aluminum dihydroxyaminoacetate, aluminum acetate, aluminum acrylate, and aluminum oleate; and/or,
the first organic solvent comprises polyethylene glycol.

7. The preparation method for a graphite composite material according to claim 5, wherein a mass ratio of the aluminum carboxylate salt to the graphite is 5:100 to 15:100.

8. The preparation method for a graphite composite material according to claim 5, wherein a mass percentage of the aluminum carboxylate salt in the first organic solvent is 0.5wt% to 5wt%.

9. The preparation method for a graphite composite material according to claim 5, wherein
the alkaline coupling agent comprises an aluminum-based coupling agent containing an amino functional group; and/or,
the alkaline coupling agent comprises at least one of aluminum 5-amino-3-carboxylate methyl ester, aluminum diisopropyldithiocarbamate, and aluminum dihydroxyaminoacetate; and/or,
the second organic solvent comprises at least one of cyclohexane, xylene, and acetone.

10. The preparation method for a graphite composite material according to claim 5, wherein a mass percentage of the alkaline coupling agent in the second organic solvent is 1wt% to 10wt%.

11. The preparation method for a graphite composite material according to claim 5, wherein
the oxidant comprises hydrogen peroxide; and/or,
the nitrogen source comprises at least one of urea, melamine, pyrrole, and aniline; and/or,
a mass ratio of the solution A, the solution B, the oxidant and the nitrogen source is 500:50:1:1 to 500:150:10:10; and/or,
the solvothermal reaction is performed under a pressure of 1MPa to 5MPa; and/or, a temperature of the solvothermal reaction is 50°C to 150°C, and a duration of the solvothermal reaction is 30min to 300min.

12. The preparation method for a graphite composite material according to claim 5, wherein
the protective atmosphere comprises at least one of nitrogen gas and an inert gas; and/or,
a heating rate of the sintering treatment is 1°C/min to 10°C/min; and/or,
a temperature of the sintering treatment is 600°C to 1200°C, and a duration of the sintering treatment is 1h to 6h; and/or,
a gas is also introduced during the sintering treatment, and the gas comprises at least one of hydrogen sulfide, phosphine, ammonia, sulfur dioxide, and nitrogen dioxide; and/or,
a volume ratio of the gas to the protective atmosphere is 1:10 to 5:10.

13. A negative electrode active material, comprising the graphite composite material according to claim 1; or, comprising the graphite composite material prepared by the preparation method according to any one of claims 5 to 12.

14. A secondary battery, comprising a positive electrode sheet, a negative electrode sheet, a separator and an electrolyte, wherein the negative electrode sheet comprises the negative electrode active material according to claim 13.

15. An electrical device, comprising the secondary battery according to claim 14.
